# EUROPÄISCHE PATENTANMELDUNG

(11) **EP 1 219 391 A2**
(43) Veröffentlichungstag der Anmeldung: **03.07.2002**
(21) Anmeldenummer: 02006734.4
(22) Anmeldetag: 25.06.1998
(51) Int. Cl.: B25B 23/14

(54) **Überlastkupplung**

(30) Priorität: 25.07.1997 DE 29713253 U
(62) Teilanmeldung aus: 98936391.6
(71) Anmelder: Maschinenfabrik Wagner GmbH & Co. KG, 53804 Much-Birrenbachshöhe (DE)
(72) Erfinder: Die Erfindernennung liegt noch nicht vor
(74) Vertreter: Selting, Günther, Dipl.-Ing.

(57) **Zusammenfassung**

Die Überlastkupplung weist ein Gehäuse (12) aus einer Gehäusekapsel (13) und einem aufgeschraubten Gehäusedeckel (14) auf. Das Drehmoment wird von der Eingangswelle (10) auf die Ausgangswelle (19) über Kupplungsteller (17,18) übertragen. Der erste Kupplungsteller (17) enthält Rollen (23), die auf einer konturierten Kupplungsbahn (25) des zweiten Kupplungstellers abrollen. Die Kupplungsbahn (25) ist so ausgebildet, daß die Rollen (23) über ihre Länge in exakter Linienberührung mit der Kupplungsbahn (25) stehen, so daß jede Rolle (23) voll trägt. Ferner ist eine Blockiervorrichtung (33) vorgesehen, mit der die Drehposition, auf die der Gehäusedeckel (14) zur Festlegung des Auslösemoments eingestellt worden ist, arretiert werden kann.

## Beschreibung

Die Erfindung betrifft eine Überlastkupplung mit zwei von einer Federvorrichtung gegeneinandergedrückten Kupplungstellern, insbesondere zur Verwendung bei Schraubgeräten zum Zwecke des Festziehens einer Schraube mit einem vorbestimmten Drehmoment.

Aus DE 296 18 817 U ist eine Überlastkupplung bekannt, die in einem Gehäuse zwei Kupplungsteller aufweist. Die Kupplungsteller sind mit zusammengreifenden Profilierungen versehen und sie werden von einer Federvorrichtung gegeneinandergedrückt. Wenn der Schraubwiderstand einer festzuziehenden Schraube größer ist als das eingestellte Auslösemoment der Überlastkupplung, gelangen die Profilierungen außer Eingriff miteinander, so daß der erste Kupplungsteller durchdreht. Auf diese Weise kann das aufzubringende Drehmoment begrenzt werden.

Im Einzelnen betrifft die Erfindung eine Überlastkupplung, bei der das Auslösemoment durch relatives Verstellen zweier Gehäuseteile einstellbar ist. Die Überlastkupplung nach DE 296 18 817 U weist eine Gehäusekapsel und einen damit verschraubten Gehäusedeckel auf. Durch Drehen des Gehäusedeckels relativ zu der Gehäusekapsel kann die Spannung der Federvorrichtung verändert werden, wodurch das Auslösemoment einstellbar ist.

Die Erfindung bezweckt nun, eine exakte Einhaltung des eingestellten Auslösemoments bei einer Überlastkupplung zu gewährleisten.

Hierzu ist erfindungsgemäß eine lösbare Blockiervorrichtung vorgesehen, die den Gehäusedeckel in seiner eingestellten Schraubposition festhält.

Die Erfindung geht von dem Gedanken aus, daß bei dem Auslösen der Überlastkupplung Schläge erzeugt werden, durch die der Gehäusedeckel an der Gehäusekapsel unbeabsichtigt verdreht werden kann. Eine weitere Möglichkeit des unbeabsichtigten Verdrehens ist dadurch gegeben, daß der Gehäusedeckel manuell drehbar sein muß, um das gewünschte Auslösemoment einzustellen. Dies setzt eine leichte Drehbarkeit voraus, mit der Folge, daß auch unbeabsichtigte Verstellungen erfolgen können. Mit der erfindungsgemäßen Blockiervorrichtung wird erreicht, daß eine einmal vorgenommene Einstellung sicher beibehalten wird.

Gemäß einer bevorzugten Ausführungsform der Erfindung besteht die Blockiervorrichtung aus einem an dem Gehäusedeckel verschiebbaren Rastelement, welche in eine Innenverzahnung der Gehäusekapsel eingreift. Die Innenverzahnung, die sich über eine gewisse Länge der Gehäusekapsel erstreckt, ermöglicht es, dem Rastelement in unterschiedlichen axialen Stellungen des Gehäusedeckels und auch in unterschiedlichen Drehstellungen anzugreifen, um die Verriegelung durchzuführen.

Im folgenden werden unter Bezugnahme auf die Zeichnungen Ausführungsbeispiele der Erfindung näher erläutert.

Es zeigen:
- Fig. 1: einen Längsschnitt eines ersten Ausführungsbeispiels der Überlastkupplung,
- Fig. 2: einen Schnitt entlang der Linie II-II von Fig. 1,
- Fig. 3: einen Schnitt entlang der Linie III-III von Fig. 1,
- Fig. 4: einen Schnitt entlang der Linie IV-IV von Fig. 1,
- Fig. 5: einen Axialschnitt durch den zweiten Kupplungsteller,
- Fig. 6: eine schematische Darstellung der Erzeugung der Kupplungsbahn,
- Fig. 7: eine Teil-Draufsicht aus Richtung des Pfeiles VII in Fig. 1,
- Fig. 8: einen Schnitt durch die Blockiervorrichtung im blockierenden Zustand und
- Fig. 9: in gleicher Darstellung wie Fig. 8 die Blockiervorrichtung im entsperrten Zustand.

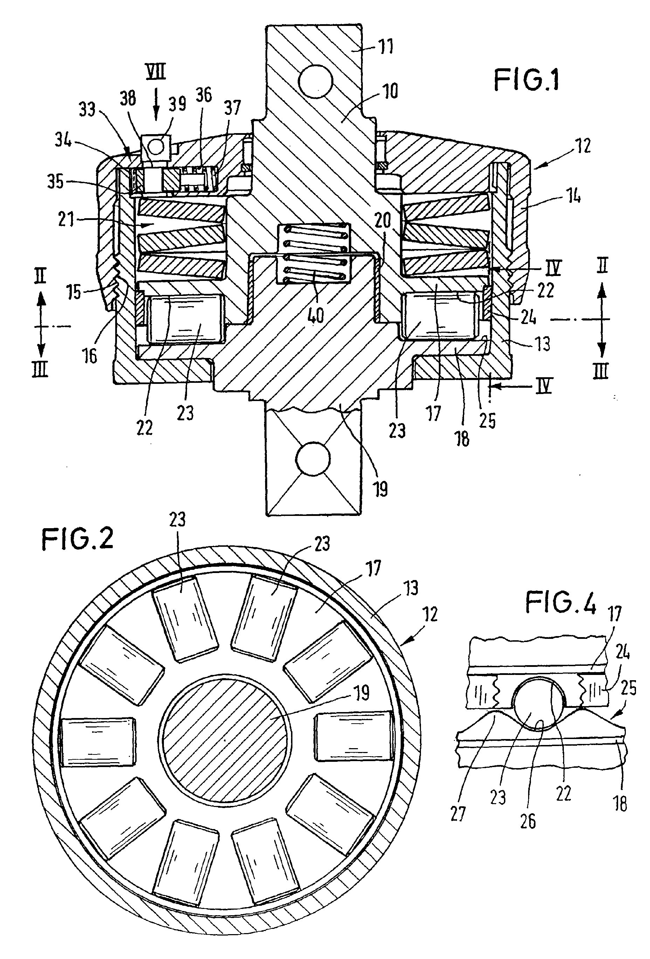

Die Überlastkupplung der Figuren 1 bis 9 weist eine Eingangswelle 10 auf, an die ein Schraubgerät in Form eines Kraftschraubers oder eines manuellen Schraubers angesetzt werden kann. Zu diesem Zweck ist die Eingangswelle mit einem Vierkant 11 versehen. Die Eingangswelle 10 ist in einem Gehäuse 12 gelagert, welches aus einer becherförmigen Gehäusekapsel 13 und einem ebenfalls becherförmigen Gehäusedeckel 14 besteht. Der Gehäusedeckel 14 ist mit einem Innengewinde 15 auf ein Außengewinde 16 der Gehäusekapsel 13 aufgeschraubt.

In dem Gehäuse 12 befindet sich ein erster Kupplungsteller 17, der mit der Eingangswelle 10 fest verbunden ist, und ein zweiter Kupplungsteller 18, der mit einer Ausgangswelle 19 fest verbunden ist. Der erste Kupplungsteller 17 enthält eine Ausnehmung, in der ein Gleitlagerring 20 zur Lagerung der Ausgangswelle 19 angeordnet ist. Die Ausgangswelle 19 ragt aus einer Öffnung im Boden der Gehäusekapsel 13 hindurch und der zweite Kupplungsteller 18 stützt sich auf dem Boden der Gehäusekapsel 13 ab. Durch die Reibung zwischen dem zweiten Gehäuseteller 18 und dem Boden der Gehäusekapsel 13 wird während des Drehbetriebes das Gehäuse 12 mit der Ausgangswelle 19 mitgedreht.

Im Gehäuse 12 ist ferner eine Federvorrichtung 21, die aus einem Tellerfederpaket besteht, angeordnet. Diese Federvorrichtung 21 stützt sich am Gehäusedeckel 14 ab und sie drückt den ersten Gehäuseteller 17 in Richtung auf den zweiten Gehäuseteller 18.

Der erste Gehäuseteller 17 weist an seiner dem zweiten Gehäuseteller 18 zugewandten Stirnfläche Nester 22 zur Aufnahme zylindrischer Mitnahmekörper 23 auf, die hier als drehbare Zylinderrollen ausgebildet sind. Diese Nester 22 sind radiale Bohrungen, die jedoch umfangsmäßig nicht geschlossen sind und sich über einen Umfang von etwas mehr als 180° erstrecken, wie aus Fig. 4 hervorgeht. In das Nest 22 kann die Rolle 23 in axialer Richtung eingeführt werden. Die Rollen werden dann gegen Herausfallen durch einen Ring 24 gesichert, der um den Kupplungsteller 17 herumgelegt ist. Die zylindrischen Rollen 23 sind radial zu dem Kupplungsteller 17 hin ausgerichtet, wie insbesondere aus Fig. 2 hervorgeht. Sie ragen mit einem Teil ihres Umfangs aus der Stirnseite des Kupplungstellers 17 heraus. Der Kupplungsteller 17 bildet somit einen Rollenkäfig. Jedes Nest 22 ist teilzylindrisch ausgebildet und hat einen Durchmesser, der es der Rolle 23 ermöglicht, sich in dem Nest 22 um ihre Achse zu drehen.

Die dem ersten Kupplungsteller 17 zugewandte Stirnseite des zweiten Kupplungstellers 18 weist eine kreisförmige Kupplungsbahn 25 auf, auf der die Rollen 23 abrollen. Diese Kupplungsbahn 25 hat eine der Anzahl der Rollen 23 entsprechende Zahl von Vertiefungen 26 und Erhöhungen 27. Entlang des äußeren Radius der Kupplungsbahn 25 bilden die Erhöhungen und Vertiefungen eine sinusförmige Linie. Entlang des inneren Radius der Kupplungsbahn 25 sind die Vertiefungen 26 breiter als die Erhöhungen 27.

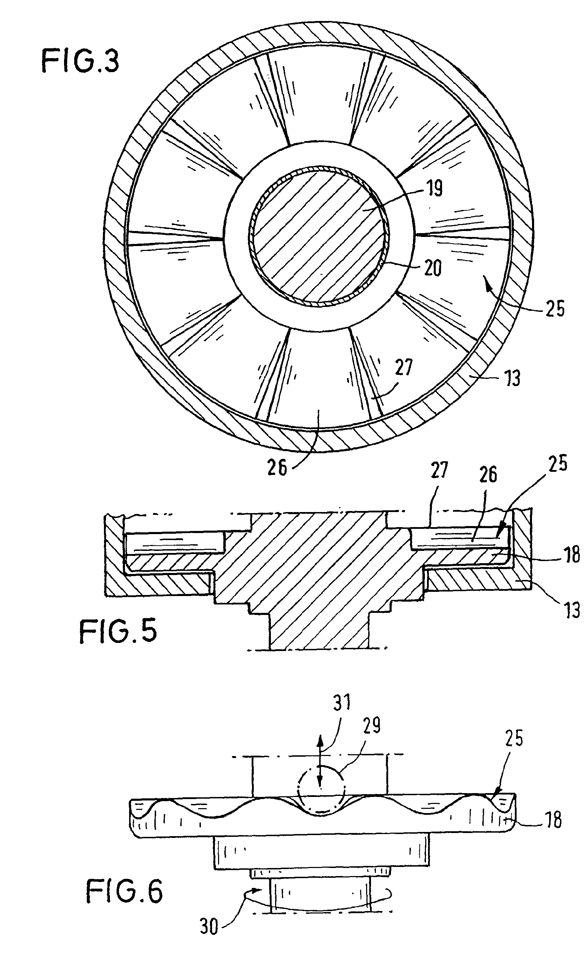

Die Kupplungsbahn 25 besteht gemäß Fig. 6 aus einer Bahnfläche, die ein zu dem zweiten Kupplungsteller 18 radial ausgerichteter Zylinder 29 von gleichem Durchmesser wie die Rollen 23 beschreibt, der während einer gleichmäßigen Drehung des zweiten Kupplungstellers 18 (Richtung des Pfeiles 30) eine periodische Axialbewegung (Doppelpfeil 31) in bezug auf den zweiten Kupplungsteller 18 ausführt. Die Bahnfläche ist dabei die Hüllkurve, die der Zylinder 29 an dem Kupplungsteller 18 beschreibt. Diese Hüllkurve entsteht dann, wenn der Zylinder 29 beispielsweise ein um seine Achse rotierender Fräser ist. Würde ein solcher Fräser allerdings zu weit nach innen (zur Achse der Ausgangswelle 19) ragen, so würde er mit seinem inneren Bereich die Erhöhung, die zwei Vertiefungen voneinander trennt, abtragen, bevor er mit seiner Unterseite auf die entsprechende Höhe angehoben worden ist. Daher darf der Zylinder 29 nur so weit an die Achse heranragen, daß die Kupplungsbahn 25 an ihrem inneren Radius immer noch die gleiche Höhe hat wie am äußeren Radius. Ebenso wie der Zylinder bzw. Fräser 29 die Kupplungsbahn 25 erzeugt, rollen später die Rollen 23 auf dieser Kupplungsbahn ab. Dabei hat jede Rolle 23 eine exakte Linienberührung mit der Kupplungsbahn 25, und zwar an jeder Stelle der Kupplungsbahn. Diese Linienberührung erstreckt sich über die gesamte Länge der Rolle 23.

Die Kupplungsbahn 25 bezeichnet nur denjenigen Streifen, der von den Rollen 23 berührt wird. Die Kontur der Kupplungsbahn kann sich nach innen fortsetzen, wobei die fortgesetzten Bereiche jedoch nicht mehr zur Bahnfläche gehören.

Bei einem auf die Eingangswelle 10 einwirkenden Drehmoment ist der Kupplungsteller 17 bestrebt, den Kupplungsteller 18 über die Rollen 23 mitzudrehen. Übersteigt das auf die Ausgangswelle 19 wirkende Lastmoment das eingestellte Kupplungsmoment, dann bleibt die Drehung des Kupplungstellers 18 zurück, wobei die Rollen 23 auf der Kupplungsbahn 25 zur jeweiligen Erhöhung 27 hin hochrollen. Hierbei wird die Federvorrichtung 21 zusammengedrückt. Werden die Erhöhungen 27 von den Rollen 23 überschritten, bedeutet dies, daß die Überlastkupplung auslöst und der Kupplungsteller 17 nunmehr dreht, während der Kupplungsteller 18 stehenbleibt. Das Auslösemoment der Überlastkupplung kann also durch Spannen der Federvorrichtung 21 eingestellt werden.

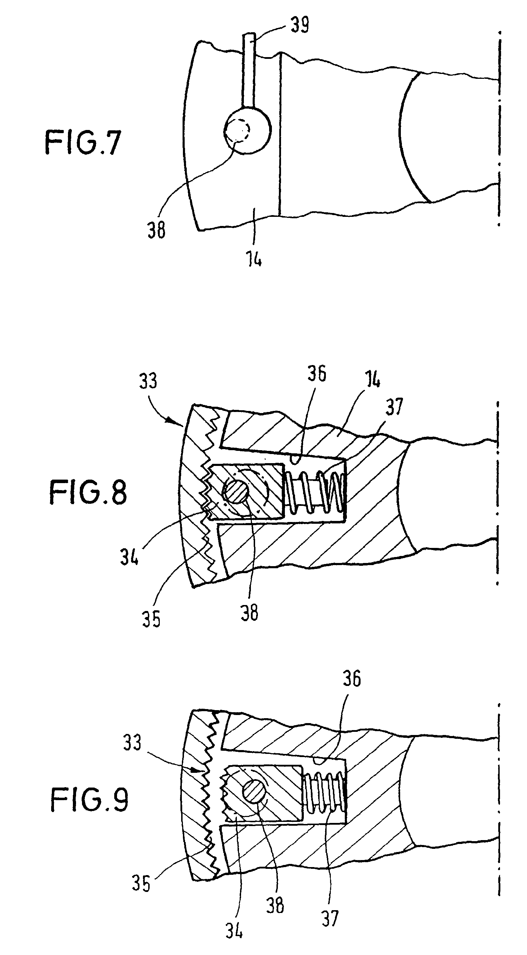

Das Einstellen des Auslösemoments erfolgt durch Drehen des Gehäusedeckels 14 relativ zu der Gehäusekapsel 13. Im Auslösefall der Kupplung treten axiale Schläge auf, durch die der Kupplungsdeckel 14 unbeabsichtigt verdreht werden kann, was eine Verstellung des Auslösemoments zur Folge hätte. Um eine solche Verstellung zu vermeiden, ist die Blockiervorrichtung 33 vorgesehen. Diese Blockiervorrichtung 33 weist ein Rastelement 34 auf, das mit einer Verzahnung versehen ist. Eine entsprechende Verzahnung 35 ist als Innenverzahnung am oberen Ende der Gehäusekapsel 13 angebracht. Das Rastelement 34 ist in einer Ausnehmung 36 des Gehäusedeckels 14 radial geführt und wird von einer Feder 37 nach außen gedrückt. Das Rastelement 34 wird von einem Exzenter 38 betätigt, der in der Stirnwand des Gehäusedeckels 14 gelagert ist und einen Hebel 39 zum Verdrehen aufweist. Durch Drehen des Exzenters 38 kann das Rastelement 34 entweder in die in Fig. 8 gezeigte Sperrposition oder in die in Fig. 9 gezeigte Freigabeposition gebracht werden. Die Innenverzahnung 35 hat eine solche Länge, daß das Rastelement sie in jeder der möglichen Stellungen des Gehäusedeckels erreichen kann.

Bei dem geringstmöglichen eingestellten Auslösemoment der Überlastkupplung ist die Federvorrichtung 21 im wesentlichen ungespannt, damit das Verstellen ohne zu großen manuellen Kraftaufwand möglich ist. Damit die Kupplungsteile im Innern der Kupplung nicht klappern, ist eine Feder 40 vorgesehen, die die beiden Kupplungsteller 17,18 auseinanderdrückt und damit der Federvorrichtung 21 entgegenwirkt. Die Feder 40 ist jedoch sehr weich, so daß ihre Kraft diejenige der Federvorrichtung 21 nicht beeinträchtigt.

## Patentansprüche

1. Überlastkupplung mit zwei Kupplungstellern (17,18), von denen mindestens einer eine periodisch in der Höhe variierende Kupplungsbahn (25) aufweist, auf der Mitnahmekörper abrollen oder gleiten, einem die Kupplungsteller (17,18) enthaltenden Gehäuse (12) und einer an dem Gehäuse (12) abgestützten, die Kupplungsteller (17,18) gegeneinanderdrückenden Federvorrichtung (21), wobei das Gehäuse (12) aus einer Gehäusekapsel (13) und einem damit verschraubten Deckel (14) besteht, **dadurch gekennzeichnet, daß** eine lösbare Blockiervorrichtung (33) vorgesehen ist, die den Gehäusedeckel (14) in seiner eingestellten Schraubposition festhält.

2. Überlastkupplung nach Anspruch 1, **dadurch gekennzeichnet, daß** die Blockiervorrichtung (33) ein an dem Gehäusedeckel (14) verschiebbares Rastelement (34) aufweist, welches in eine Innenverzahnung (35) der Gehäusekapsel (13) eingreift.

3. Überlastkupplung nach Anspruch 2, **dadurch gekennzeichnet, daß** das Rastelement (34) von einem Exzenter (38) geführt ist, der durch einen an der Außenseite des Gehäusedeckels (14) befindlichen Hebel (39) drehbar ist.

4. Überlastkupplung nach einem der Ansprüche 1 - 3, **dadurch gekennzeichnet, daß** die Federvorrichtung (21) bei dem geringstmöglichen eingestellten Auslösemoment ungespannt ist, und daß eine die beiden Kupplungsteller (17,18) auseinanderdrückende Feder (40) vorgesehen ist.
